# FASCICULE DE BREVET EUROPEEN

(11) **EP 1 966 957 B1**
(45) Date de publication et mention de la délivrance du brevet: **28.07.2010**
(21) Numéro de dépôt: 06848964.0
(22) Date de dépôt: 28.12.2006
(51) Int. Cl.: H04L 12/56, H04R 3/12

(54) **SYSTÈME DE DISTRIBUTION SANS FIL D'UN SIGNAL AUDIO ENTRE UNE PLURALITÈ D'ENCEINTES ACTIVES**
SYSTEM ZUR DRAHTLOSEN VERTEILUNG EINES AUDIOSIGNALS ZWISCHEN MEHREREN AKTIVEN LAUTSPRECHERN
SYSTEM FOR WIRELESSLY DISTRIBUTING AN AUDIO SIGNAL BETWEEN A PLURALITY OF ACTIVE LOUDSPEAKERS

(30) Priorité: 29.12.2005 FR 0513448
(43) Date de publication de la demande: 10.09.2008
(73) Titulaire: Seydoux, Henri, 75017 Paris (FR)
(72) Inventeur: Seydoux, Henri, 75017 Paris (FR)
(74) Mandataire: Dupuis-Latour, Dominique
(86) Numéro de dépôt international: PCT/FR2006/002898
(87) Numéro de publication internationale: WO 2007/074245

(56) Documents cités:
- EP-A- 1 703 773
- WO-A-03/096741
- US-A1- 2005 044 372
- US-A1- 2005 190 928
- US-A1- 2006 116 107

## Description

L'invention concerne un système de distribution de signaux audio entre une pluralité d'enceintes actives, permettant de restituer ces signaux sur les diverses enceintes respectives.

Les matériels audio de nouvelle génération intègrent une part de plus en plus importante de circuits numériques, destinés au traitement et à la transmission des signaux audio.

La numérisation rend notamment possible une transmission par ondes radio, sans perte de qualité, des signaux audio entre les divers éléments instituant la chaîne de reproduction audio. La transmission sans fil est d'autant plus avantageuse que le nombre des canaux à reproduire est important : on assiste en effet à une multiplication du nombre des canaux, aussi bien pour les installations de pure reproduction audio (par exemple avec la technologie SACD de reproduction audio à haute définition) que pour les installations de type "cinéma à la maison". Généralement, ces installations prévoient une configuration sonore de type "5.1", c'est-à-dire avec un canal avant central, deux canaux avant latéraux (gauche et droit), deux satellites arrière (gauche et droit), ainsi qu'un caisson de basses. Le nombre de canaux peut même être augmenté jusqu'à une configuration "7.1", avec deux canaux d'ambiance ("*surround*") latéraux supplémentaires. De multiples configurations intermédiaires peuvent également être envisagées, depuis une simple configuration mono ou stéréo à une ou deux enceintes, jusqu'à des configurations incluant de nombreuses enceintes satellites et d'ambiance.

Une problématique comparable se présente dans les installations de sonorisation professionnelle pour les lieux publics, magasins, chambres d'hôtel, etc. qui peuvent comprendre plusieurs dizaines, voire même plus, d'enceintes acoustiques, recevant de la musique ou autres signaux audio depuis une tête de réseau centrale. Il peut être en particulier souhaitable de diffuser des signaux de façon sélective vers tel ou tel groupe d'enceintes, et non vers d'autres, ou encore de pouvoir déplacer aisément les enceintes, par exemple dans le cas des installations temporaires mises en place au cours de spectacles, salons, etc.

Pour éviter la multiplication des câbles de liaison entre la source de signaux et les enceintes, il a été proposé des systèmes de transmission sans fil vers les différentes enceintes du système, qui sont alors des enceintes dites "actives", c'est-à-dire incorporant un ou plusieurs amplificateurs basse fréquence associés au haut-parleur (ou au système de haut-parleurs) de l'enceinte. Ces enceintes actives ne requièrent en entrée qu'un signal de bas niveau, qui peut être transmis par des moyens sans fil, radio ou infrarouge, depuis un émetteur relié à la source de signal. Avec une telle enceinte active combinée à une transmission sans fil, la seule contrainte est le branchement de l'alimentation de l'enceinte à une prise de courant, ce qui laisse une très grande latitude pour le positionnement des différentes enceintes du système (même si elle ne sont qu'au nombre de deux, comme dans le cas d'un simple ensemble stéréo), positionnement dont on sait l'importance pour aboutir à une reproduction satisfaisante de l'environnement musical et des effets sonores éventuels. De nombreuses techniques ont été proposées pour réaliser la transmission sans fil de signaux audio, par exemple au moyen d'un boîtier émetteur indépendant relié à une source audio, ou à la sortie "ligne" d'une chaîne traditionnelle, boîtier qui, par transmission radio analogique ou numérique, envoie le signal produit par la source ou la chaîne vers des enceintes actives distantes. Ce boîtier émetteur peut être incorporé à la chaîne, l'ensemble audio se présentant alors sous forme d'un bloc intégré et de n enceintes actives. Cette chaîne, c'est-à-dire l'ensemble des éléments du système de reproduction audio à l'exception des enceintes (actives ou non), peut être composée de plusieurs éléments distants reliés entre eux par des moyens appropriés, filaires ou sans fil, ou intégrés dans une même unité assurant par des commutations appropriées les différentes fonctions (radio, CD, cassette, etc.)

Il est également souhaitable de disposer d'une transmission sans fil non seulement en aval, c'est-à-dire de la chaîne aux enceintes, mais également en amont, c'est-à-dire pour relier des sources distantes telles que baladeur ou lecteur de musique numérique (MP3, AAC, ...), assistant numérique personnel ou encore un ordinateur pourvu de moyens de transmission radio intégrés ou ajoutés sous forme d'un adaptateur connecté à un port externe de l'ordinateur.

Les divers systèmes proposés jusqu'à présent ne résolvent que partiellement le problème de la suppression des liaisons filaires dans un ensemble de reproduction audio.

Ces systèmes connus sont généralement conçus autour d'un boîtier émetteur couplé à des enceintes actives spécialement adaptées, avec une technologie privative propre au constructeur, conduisant à un système fermé, peu ou pas évolutif.

Pour les liaisons des diverses sources, des adaptateurs d'émission et de réception sont requis, avec des contraintes de branchement, de liaison, d'alimentation ..., qui peuvent rebuter les utilisateurs peu motivés par ce type de technologie.

Enfin, l'ergonomie de ces appareils est en général assez médiocre et nécessite une implication de l'utilisateur telle que celui-ci, en pratique, n'utilise que très peu la multitude de fonctions qui lui sont offertes par le système.

Le US-A-2005/0190928 décrit un système de diffusion de plusieurs canaux audio organisée autour d'un téléviseur. Ce dernier communique par des liaisons sans fil avec divers périphériques tels que des enceintes actives, un téléphone portable, un ordinateur, etc. pour la diffusion des canaux audio et/ou l'échange de commandes et de données avec ces périphériques. Le système définit une topologie de réseau à partir d'un "dispositif maître", prédéterminé soit par construction (par exemple le téléviseur est considéré comme le dispositif maître), soit par la manoeuvre d'un commutateur accessible à l'utilisateur. Tous les autres dispositifs sont alors des "esclaves" directement rattachés à ce dispositif maître, selon une topologie en étoile à un seul niveau.

La proposition de cette antériorité, si elle permet de pallier un certain nombre des inconvénients exposés plus haut grâce à la mise en oeuvre de liaisons sans fil, présente cependant une souplesse d'utilisation limitée, notamment par le fait que le dispositif maître doive être défini à l'avance, par construction ou par l'utilisateur. De ce fait, le réseau n'est pas nécessairement configuré de façon optimale, compte tenu des conditions de propagation en particulier. Il n'est pas non plus modifiable dynamiquement en fonction des circonstances : notamment un débranchement ou une panne du dispositif maître entraîne un arrêt général du système.

Le EP 1 703 773 A2 (document intercalaire opposable seulement au titre de la nouveauté) décrit un système audio dans lequel une pluralité d'enceintes actives (ou de microphones) sont chaînés ensemble, selon une topologie linéaire en cascade, définie à priori, chaque enceinte étant couplée par une liaison sans fil à celle qui la précède et à celle qui la suit dans la chaîne. Le réseau d'enceintes est ainsi déterminé à l'avance, et il n'est pas modifiable dynamiquement.

L'un des buts de l'invention est de proposer un système de distribution d'un signal audio multicanal universel permettant de pallier les difficultés évoquées ci-dessus grâce notamment aux caractéristiques suivantes:
- un minimum d'éléments matériels apparents, les différents circuits et organes fonctionnels étant incorporés aux enceintes et n'étant pas visibles ni accessibles à l'utilisateur ;
- pas de branchement nécessaire, si ce n'est la prise de courant pour alimenter l'enceinte ;
- ergonomie simplifiée à la mise en route, le système étant *"Plug-and-Play"* c'est-à-dire que l'utilisateur n'aura qu'à se soucier de placer les enceintes et de brancher les prises de courant, le système se configurant de lui-même de façon totalement automatique et transparente pour l'utilisateur;
- définition par le système lui-même de la topologie du réseau selon une configuration optimale, et ceci de façon entièrement systématique et automatique ;
- possibilité de définir et hiérarchiser le réseau à partir de l'une quelconque des enceintes du système, celles-ci étant initialement toutes indifférenciées du point de vue de la topologie du réseau ;
- possibilité d'auto-reconfiguration dynamique du réseau sans interruption du fonctionnement, par exemple en cas de modification des conditions de transmission du signal radio ou de débranchement d'une ou plusieurs enceintes.
- ergonomie simplifiée, grâce à une automatisation poussée du fonctionnement et une réduction au strict minimum des boutons-poussoirs et autres commandes ;
- caractère évolutif et auto-adaptatif, quel que soit le nombre d'enceintes actives (deux, quatre, cinq, "5.1", "7.1",...) : par exemple, si un utilisateur dispose déjà d'une configuration stéréo (deux enceintes), il lui suffira d'acquérir et de brancher deux satellites et un caisson de basses pour transformer immédiatement son ensemble en système "4.1 ", sans intervention sur les enceintes existantes, le système se reconfigurant de façon entièrement automatique dès la mise sous tension des nouvelles enceintes ;
- utilisation possible avec toute source munie de moyens de transmission sans fil appropriés ;
- possibilité de pilotage à distance, non seulement par une télécommande spécifique, mais également par un quelconque appareil pourvu de touches et de moyens de transmission sans fil appropriés, par exemple au moyen d'un téléphone portable.

Le système de l'invention est du type divulgué par la revendication 1. Les sous-revendications visent des modes de réalisation préférentiels avantageux.

On va maintenant décrire un exemple de mise en oeuvre du dispositif de l'invention, en référence aux dessins annexés où les mêmes références numériques désignent d'une figure à l'autre des éléments identiques ou fonctionnelle ment semblables.
La figure 1 illustre les différentes étapes (a) à (d) de la mise en place et de la configuration du réseau d'enceintes selon l'invention.
La figure 2 illustre de façon schématique les divers modes de fonctionnement du système de l'invention, avec les transitions d'états et de modes possibles.
La figure 3 est une vue schématique d'un exemple de système de l'invention et des différents éléments qui peuvent y être reliés.
La figure 4 est une vue de face d'une des enceintes actives du système selon l'invention.
La figure 5 est un schéma fonctionnel par blocs de l'enceinte active du système de l'invention.
La figure 6 illustre les divers modules logiciels impliqués dans la restitution du signal audio.
La figure 7 est un schéma par blocs fonctionnels des différents éléments de l'enceinte concernés par la restitution audio.
Les figures 8 et 9 sont homologues des figures 5 et 7, pour une enceinte simplifiée utilisable dans le système de l'invention.

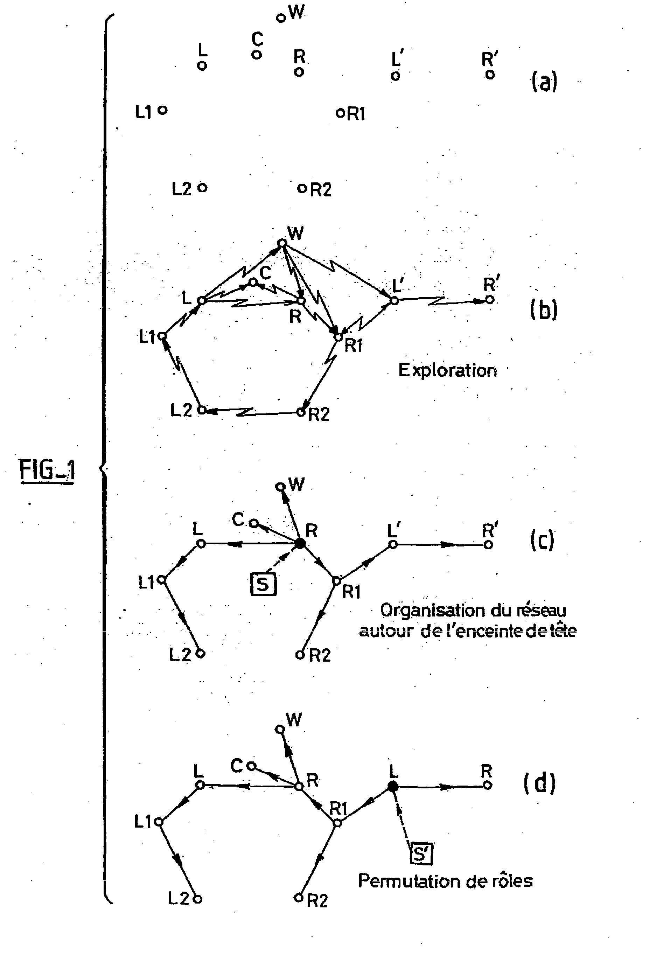

On va d'abord décrire, en référence à la figure 1, les différentes étapes de configuration d'un réseau.

On prendra l'exemple d'un système comprenant une configuration de type "7.1" plus une paire d'enceintes stéréo supplémentaires, par exemple des enceintes installées dans une autre pièce.

Les enseignements de l'invention sont cependant applicables, par simple extrapolation, à des configurations comportant un nombre d'enceintes moindre (par exemple une configuration stéréo de base à deux enceintes, droite et gauche, qui est la configuration la plus simple), aussi bien qu'à des configurations encore plus complexes, par exemple dans des applications de sonorisation professionnelle. Au départ, l'utilisateur place les enceintes à l'endroit voulu, en respectant le positionnement respectif des différentes sources acoustiques. Une configuration "7.1" comprend ainsi des enceintes de canal avant central C, de canaux avant latéraux gauche et droit L et R, de canaux d'ambiance latéraux L1 et R1, de satellites arrière L2 et R2 et un caisson de basses W. Dans l'exemple illustré on supposera que l'installation comprend également, par exemple dans une pièce voisine, une paire d'enceintes droite et gauche L'et R'.

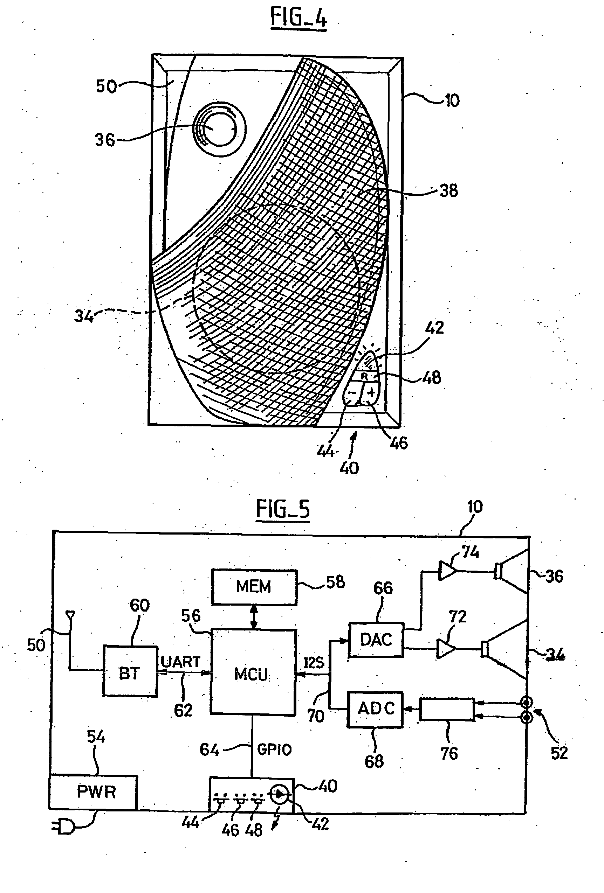

Chacune des enceintes est une enceinte "active", c'est-à-dire comprenant non seulement un ou plusieurs haut-parleurs, mais également un amplificateur intégré. Chaque enceinte comprend également une interface radio lui permettant de communiquer avec l'extérieur pour recevoir et émettre des signaux, de la manière que l'on décrira plus en détail par la suite, en référence aux figures 5 à 7.

Le type de liaison sans fil radio bidirectionnelle choisi est très avantageusement une liaison de type *Bluetooth* (marque déposée du Bluetooth SIG, Inc.).

En effet, les spécifications *Bluetooth* offrent la possibilité de piloter à distance par une liaison sans fil bidirectionnelle un dispositif éloigné. En pratique, il s'agit le plus souvent d'un téléphone portable ou d'un périphérique informatique, mais les spécifications *Bluetooth* ne se limitent pas à ce type d'appareil et incluent notamment des profils compatibles avec la transmission de flux audio multicanal codés de haute qualité (profil *A2DP : Advanced Audio Distribution Profile*)*,* ainsi que des profils assurant l'interopérabilité des appareils *Bluetooth* avec des fonctions de commande audio et vidéo (profil AVRCP : *Audio Video Remote Control Profile*)*.*

Le choix de la technologie *Bluetooth* est particulièrement avantageuse compte tenu de son caractère universel et évolutif, de l'existence de nombreuses fonctionnalités, ainsi que de nombreux composants, au surplus peu coûteux, spécialement conçus pour sa mise en oeuvre. Ce choix n'est cependant aucunement limitatif, et l'invention peut être mise en oeuvre au moyen d'autres techniques de transmission sans fil, dès lors que ces techniques offrent un débit de données suffisant pour permettre la transmission de signaux audio numériques de haute qualité : tel est par exemple le cas de la norme IEEE 802.11 (ISO/IEC 8802-11) dite "WiFi".

On notera que la technologie *Bluetooth* est utilisée dans le cadre de l'invention de manière quelque peu différente de sa finalité originelle - mais toutefois sans modification des protocoles, de manière à rester parfaitement compatible avec les prescriptions des spécifications *Bluetooth.* En effet, la technologie *Bluetooth* a été conçue pour permettre une transmission ponctuelle de données sur une durée limitée, par exemple la durée d'une conversation téléphonique, ou la durée de l'envoi d'un fichier à une imprimante, mais il n'a pas jusqu'à présent été envisagé de l'utiliser pour établir une liaison permanente dans un système, comme dans le cas de l'invention, où l'on verra que la liaison entre les différentes enceintes perdure tant que les enceintes ne sont pas désalimentées, c'est-à-dire débranchées : lorsque le système est en veille, c'est-à-dire apparemment inactif pour un utilisateur, les liaisons sans fil entre les enceintes restent actives, quoique avec un trafic d'informations réduit, de manière à permettre le maintien de la configuration du réseau et la détection à tout moment d'un signal externe par le réseau.

Une autre originalité de l'invention consiste à mettre à profit les possibilités particulières offertes par les spécifications *Bluetooth* de réaliser non seulement des liaisons point-à-point entre deux éléments, mais également d'établir et de gérer des réseaux plus ou moins complexes constitués entre un certain nombre de ces éléments.

Un premier type de réseau est le "piconet", ou micro-réseau, qui se crée de manière automatique lorsque plusieurs éléments compatibles *Bluetooth* se trouvent dans un même rayon. Le piconet .suit une topologie en étoile, avec un maître et plusieurs esclaves. Les esclaves peuvent être soit "actifs", c'est-à-dire en communication avec le maître, soit "parqués", c'est-à-dire mis provisoirement en sommeil, avec possibilité pour le maître de les réveiller pour les rendre actifs. Les communications sont directes entre le maître et les esclaves. Les esclaves ne peuvent pas communiquer entre eux.

Un autre type de réseau selon les spécifications *Bluetooth* est le "scatter-net", ou réseau éclaté, qui est un réseau formé de plusieurs piconets reliés entre eux par un esclave commun, qui possède plusieurs maîtres. Ceci permet, géographiquement, d'augmenter l'étendue du réseau par recouvrement partiel et chaînage de plusieurs piconets.

On notera à cet égard que l'invention sera décrite ici dans le cadre d'une transmission mettant en oeuvre une technologie *Bluetooth* mais que, comme indiqué plus haut, ce choix n'est aucunement limitatif et que d'autres technologies permettant de constituer un réseau local sans fil WLAN sont utilisables aussi bien. En particulier, la terminologie "maître/ esclave", qui est celle utilisée par les spécifications *Bluetooth,* ne doit être aucunement considérée comme limitative, et doit être considérée comme équivalente à toute autre terminologie de description de topologie de réseau telle que "hôte/périphérique", "hôte/dispositif", ou "client/serveur". L'invention propose, à partir d'un ensemble d'enceintes indépendantes simplement placées dans un local, comme illustré sur la figure 1 (a), de créer et configurer un réseau sans fil reliant ces enceintes, ce réseau permettant de faire circuler, sous la forme de messages numériques, des signaux audio à diffuser par les enceintes du système.

On va expliquer comment cette configuration peut être réalisée de manière entièrement automatique, et de plus adaptative, c'est-à-dire que l'organisation du réseau pourra être modifiée automatiquement en cas, par exemple, d'ajout ou de retrait d'une enceinte, et ce façon entièrement transparente pour l'utilisateur.

À l'origine - et il s'agit là d'une caractéristique particulièrement originale procurée par l'invention - toutes les enceintes sont indépendantes et sur le même plan du point de vue de la topologie du réseau à configurer, c'est-à-dire que l'enceinte qui sera maîtresse (hôte) du réseau hiérarchisé n'est pas nécessairement déterminée *a priori* et pourra être, en fonction des circonstances, l'une quelconque des enceintes du système.

Les enceintes sont cependant "différenciées", non pas en ce qui concerne la topologie de connexion (qui sera définie par le réseau lorsque celui-ci sera configuré) mais selon leur position physique, fonction du rôle acoustique qu'elles auront à jouer: par exemple "enceinte droite", "enceinte gauche", "caisson de basses", "satellite arrière droit", satellite arrière gauche", etc.

La différenciation de l'enceinte peut être opérée de plusieurs manières :
- de façon matérielle, une fois pour toutes : l'enceinte comporte alors une étiquette permettant de reconnaître le rôle qu'elle doit jouer dans l'installation,
- de façon matérielle et modifiable, par exemple par un commutateur interne ou placé en face arrière,
- par logiciel, *a posteriori* après configuration du réseau, par envoi sur celui-ci de messages spécifiques sur requête de l'utilisateur,
- de façon entièrement automatique, en prévoyant, *a priori* ou *a posteriori* des moyens de localisation dans l'espace des positions relatives des différentes enceintes, de manière à les différencier en fonction de leur position physique relative.

Avant la configuration, toutes les enceintes sont en un mode dit "nouveau", c'est-à-dire qu'elles sont encore indépendantes, et vont chercher à se configurer en réseau.

La *première phase* du protocole de configuration du réseau est illustrée figure 1b.

Elle est exécutée de manière autonome par chacune des enceintes, et conformément aux protocoles *Bluetooth* standard : chaque enceinte se configure en mode "découvrable" de manière à pouvoir être reconnue par les autres, et va rechercher toutes les enceintes situées dans son rayon d'action, c'est-à-dire avec lesquelles il lui est possible d'établir une communication sans fil satisfaisante. En effet, en raison de l'éloignement des éléments et de la portée volontairement limitée de la transmission *Bluetooth,* il peut se faire que certaines des enceintes ne soient pas visibles de toutes les autres enceintes, ou que la liaison soit d'une qualité trop faible, ce qui aurait pour effet d'introduire un nombre excessif d'erreurs de transmission conduisant à une répétition des données à transmettre et un retard trop important dans le flux audio reçu.

À ce stade ou à un stade ultérieur, l'enceinte examine également si l'objet *Bluetooth* avec lequel elle a établi une liaison effective est bien un objet "compatible", c'est-à-dire une enceinte destinée à la constitution d'un système selon l'invention, et non un périphérique qui sera utilisé ultérieurement (source audio ou télécommande), ou encore un autre dispositif *Bluetooth* n'ayant aucun rapport fonctionnel avec le système de l'invention (imprimante, etc.). Cette vérification de compatibilité peut notamment se fonder sur un paramètre *Bluetooth* libre spécifiquement paramétré, par exemple le *"Dedicated Inquiry Access Code".*

Cette vérification peut en particulier mettre en oeuvre une authentification des enceintes entre elles, par exemple une authentification basée sur un algorithme à clef publique de type RSA ou analogue.

Cet algorithme est en lui-même bien connu, mais il est appliqué ici de manière originale.

En effet, dans le cadre de la présente invention, deux enceintes doivent pouvoir s'authentifier :
- mutuellement,
- de manière sûre (ce que permet une clef publique),
- rapidement,
- sans intervention ni implication de l'utilisateur (à la différence d'un algorithme RSA utilisé de manière conventionnelle),
- de façon préalable (dans la mesure où, avant l'authentification, il n'est pas possible d'établir la liaison effective avec l'enceinte distante).

L'invention utilise la caractéristique selon laquelle le logiciel des enceintes est le même pour toutes les enceintes, et l'identité de ces logiciels fait que les clefs publiques et privées seront les mêmes pour chaque enceinte, donc connues de chacune d'entre elles.

A cet effet, chaque enceinte utilise une donnée d'identification prédéterminée, par exemple le *"Friendly Name"* ou l'"*EIR Information"* des spécifications *Bluetooth* ou l'identifiant *SSID* d'un réseau WLAN, et combine par un algorithme à clef publique de type RSA cette donnée aux données d'authentification pour produire une signature numérique. Cette signature est reçue par l'enceinte distante, qui la décode et la compare à sa propre donnée d'identification.

On notera que, dans la mesure où les clefs publique et privée sont les mêmes pour chaque enceinte (toutes utilisent le même logiciel) et donc connues de chaque enceinte, il n'y a pas besoin de procéder à un échange préalable de la clef publique avant l'authentification.

On notera également que le contrôle du *"Dedicated Inquiry Access Code*" mentionné plus haut constitue un premier niveau de filtrage qui permet de limiter l'impact des interrogations opérées sur les autres enceintes.

Par ailleurs, dans la mesure où chaque enceinte diffuse un message vers toutes les autres enceintes, cette procédure est également exécutée en sens inverse, depuis l'enceinte distante. L'authentification selon l'invention est ainsi une authentification mutuelle et symétrique entre les deux enceintes. Pour un nombre d'enceintes supérieur à deux, l'authentification est effectuée de la même façon entre tous les couples d'enceintes présentes.

Sur la base des résultats de la recherche ainsi opérée, chaque enceinte établit une "table de proximité" où chacune des enceintes qui lui est visible est identifiée de manière univoque, par exemple par son adresse MAC (*Media Access Control*)*,* qui est l'adresse *Bluetooth* dans le cas présent). Cette table comprend par exemple, pour chacune des enceintes trouvées, son adresse MAC, la version de son logiciel ainsi que sa "différenciation" au sens indiqué plus haut, c'est-à-dire la définition de son rôle spécifique (avant gauche, avant droite, caisson de basses, etc.).

La *deuxième phase* du protocole de configuration consiste à désigner, parmi toutes les enceintes qui ont été découvertes à la phase précédente, l'une d'entre elles qui constituera l'enceinte de tête du réseau, à partir de laquelle ce réseau sera hiérarchisé de manière à définir de façon univoque un chemin pour la diffusion des signaux audio.

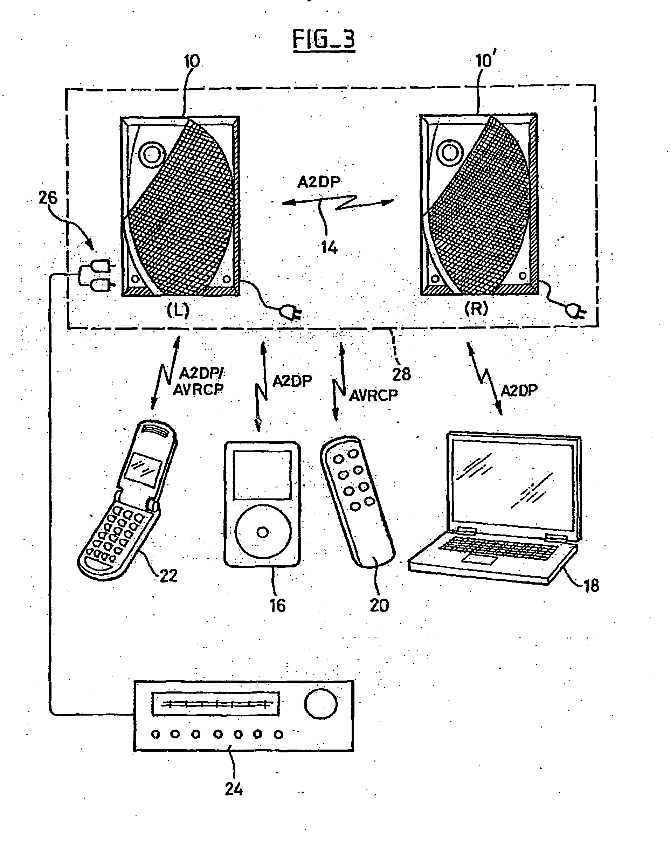

Cette enceinte, ci-après désignée "enceinte de tête" aura également pour fonction de servir de "tête de pont" (*pier*) vers l'extérieur pour le réseau, c'est-à-dire de constituer un point d'accès, seul visible, pour tout périphérique formant source de signaux audio et/ou de commandes pour le réseau. Des exemples de ces périphériques seront décrits plus en détail plus bas en référence à la figure 3.

En effet, un aspect important de l'invention est le fait que le système constitué des diverses enceintes du réseau se comporte comme un ensemble unique vis-à-vis des différents périphériques sans fil extérieurs qui peuvent lui être couplés, c'est-à-dire que, une fois le système configuré, les divers périphériques ne verront, fonctionnellement, qu'un seul dispositif compatible *Bluetooth* auquel chaque périphérique pourra se coupler sans qu'il lui soit nécessaire, notamment, de s'adapter à la topologie des différentes enceintes du système, et ceci même si la communication avec l'enceinte de tête n'est pas directe, mais se fait via une ou plusieurs autres enceintes (on exposera plus bas cet aspect de l'invention plus en détail).

La désignation de l'enceinte de tête est opérée par un algorithme qui attribue une note en fonction de divers paramètres, par exemple le numéro de version de logiciel le plus récent, l'adresse MAC la plus élevée, etc. Cet algorithme est exécuté par chacune des enceintes, sur la base de sa table de proximité, en appliquant l'algorithme à chacune des enceintes répertoriées dans la table : elle se connecte alors à cette dernière, pour permettre l'échange de messages permettant d'évaluer le critère de l'enceinte interrogée par rapport à son propre critère. Ces messages échangés sont du type question/réponse tels que : "est-ce que tu as mieux ?", "j'ai mieux", "je n'ai pas mieux", "je suis l'enceinte de tête" : chaque enceinte cherche le "candidat" tête de réseau en appliquant l'algorithme à toutes les entrées de sa table de proximité, puis se connecte à ce candidat et, pour confirmer sa décision, lui envoie un message "est-ce que tu as mieux ?" (sous entendu : " ... que la note donnée par l'algorithme appliqué à ma table de proximité)". La réponse sera : "j'ai mieux", "je n'ai pas mieux", ou "je suis l'enceinte de tête". Puis l'enceinte qui pense avoir la meilleure note essaye de se connecter à toutes les autres enceintes, et ainsi, de proche en proche, jusqu'à trouver l'enceinte ayant la note la plus élevée, qui sera alors désignée comme enceinte de tête.

De façon générale, le critère permettant de sélectionner l'enceinte de tête parmi toutes les enceintes peut être un critère unique ou une combinaison de plusieurs critères associés et éventuellement pondérés, parmi lesquels :
- le numéro d'adresse MAC ("*Device Address*" dans le cas particulier d'une communication en technologie *Bluetooth*)*,*
- la possibilité d'établir une liaison directe de l'enceinte de tête à chacune des autres enceintes du réseau (absence de noeud caché),
- la recherche de la topologie la plus simple possible (en évitant par exemple la constitution de scattemets, si une topologie de piconets est possible et suffisante),
- le rôle acoustique de l'enceinte dans le réseau (par exemple une enceinte centrale ou un caisson de basse sera considéré comme *a priori* plus favorablement placé qu'un satellite arrière).

On verra plus loin qu'il est possible de procéder si nécessaire à une reconfiguration dynamique du réseau, de façon transparente pour l'utilisateur, si l'un de ces critères venait à changer.

L'échange des messages entre les diverses enceintes au cours de cette deuxième phase permet notamment, de proche en proche, de corriger d'éventuelles erreurs de sélection de l'enceinte de tête dues à une connaissance parcellaire du réseau (une enceinte ne voit pas nécessairement toutes les autres), ou à des lacunes lors de la détection.

Après un certain nombre d'itérations, cette deuxième phase aboutit ainsi à la désignation de l'enceinte de tête (*pier*)*,* les autres enceintes étant alors toutes désignées comme "enceintes rattachées" (*linked*)*,* c'est-à-dire des enceintes non autonomes, dépendantes de l'enceinte de tête et recevant de celle-ci les données audio à diffuser.

La *troisième phase* du protocole de configuration est une phase d'organisation du réseau autour de l'enceinte de tête (*pier networking*)*,* illustrée figure 1c.

Il s'agit de passer de la configuration de la figure 1b, où toutes les enceintes jouent le même rôle dans le réseau et où il peut exister plusieurs chemins pour aller d'une enceinte à une autre, à la configuration de la figure 1c, qui est une topologie de réseau hiérarchisée en forme de graphe orienté, définissant un chemin unique entre l'enceinte de tête (l'enceinte R, dans l'exemple illustré) et toute autre enceinte du système.

Pour cela, l'enceinte de tête commence par collecter les tables de proximité de toutes les autres enceintes. Chaque enceinte rattachée va envoyer sa table de proximité au "candidat" trouvé à l'étape précédente. Celui-ci l'envoie à son propre "candidat", et ainsi de suite jusqu'à atteindre l'enceinte de tête.

L'enceinte de tête explore alors toutes les tables de proximité collectées et construit un graphe de réseau, fonction des visibilités de chacune des enceintes. Un certain nombre de messages sont ainsi échangés entre les enceintes, en provenance ou à destination de l'enceinte de tête. Ceci permet à cette dernière de former une carte du réseau sous sa forme initiale, à partir des tables de visibilité de toutes les autres enceintes, et ce même si une enceinte ne voit pas toutes les autres. Ce réseau peut être de très grande étendue, par exemple dans des applications professionnelles pour sonoriser des lieux publics.

Dans le réseau, chaque enceinte peut être :
- enceinte source, correspondant à la tête du réseau (cas de l'enceinte R dans l'exemple de la figure 1c) ; l'enceinte source recevra les données provenant de la source audio (S sur la figure 1c) et les diffusera vers une ou plusieurs autres enceintes du réseau.
- enceinte relais, qui devra renvoyer des messages vers un ou plusieurs destinataires définis par le schéma de routage (cas des enceintes L, L1, R1 et L' dans l'exemple de la figure 1c) ; une enceinte relais est un noeud interne du réseau, qui recevra les données audio d'un autre noeud (l'enceinte source ou une autre enceinte relais) et les diffusera à une ou plusieurs autres enceintes.
- enceinte terminale, qui recevra des messages mais ne les relaiera pas (cas des enceintes L2, C, W, R2 et R' dans l'exemple de la figure 1c).

En fonction de la capacité du réseau et des visibilités mutuelles, plusieurs topologies peuvent être envisagées à partir de la tête de réseau, de manière à optimiser la diffusion des messages.

Plus précisément, le graphe de diffusion est constitué d'une combinaison de piconets et de scattemets, au sens des spécifications *Bluetooth.*

Pour cela, l'algorithme construit un graphe où chaque noeud correspond à une enceinte et où deux noeuds sont connectés si et seulement si l'une au moins des enceintes voit l'autre. Ce graphe est utilisé pour calculer une configuration optimisée du réseau, qui sera plus tard utilisée pour transmettre suivant un chemin optimal (donc avec le débit le plus élevé possible) les signaux audio à reproduire en flux continu, et pour décider des enceintes du système qui doivent être ou non maintenues visibles.

Une fois le graphe construit, l'algorithme détermine les points d'articulation, c'est-à-dire les points du graphe dont la suppression entraînerait le partitionnement du graphe en plusieurs composantes connexes, c'est-à-dire en plusieurs sous-graphes distincts.

La configuration du réseau est alors révisée de manière à se présenter sous forme d'un scattemet, c'est-à-dire d'une chaîne de piconets (ces termes étant entendus au sens des spécifications *Bluetooth*)*.* Cette chaîne de piconets permettra de diffuser le flux audio de l'enceinte de tête jusqu'à chacune des enceintes. L'algorithme utilise pour cela le graphe de visibilité, et recalcule un réseau optimisé par la connaissance des points d'articulation. Le résultat, ou "schéma de routage" qui définit pour chaque enceinte son rôle dans la transmission des signaux au sein du réseau, se présente sous forme de tables de scatternet constituées par l'enceinte de tête et envoyées sous forme de messages encapsulés à chacune des enceintes formant les noeuds du graphe.

Une fois achevée cette troisième phase du processus d'initialisation, le réseau est constitué et il est opérationnel pour recevoir et diffuser des signaux audio.

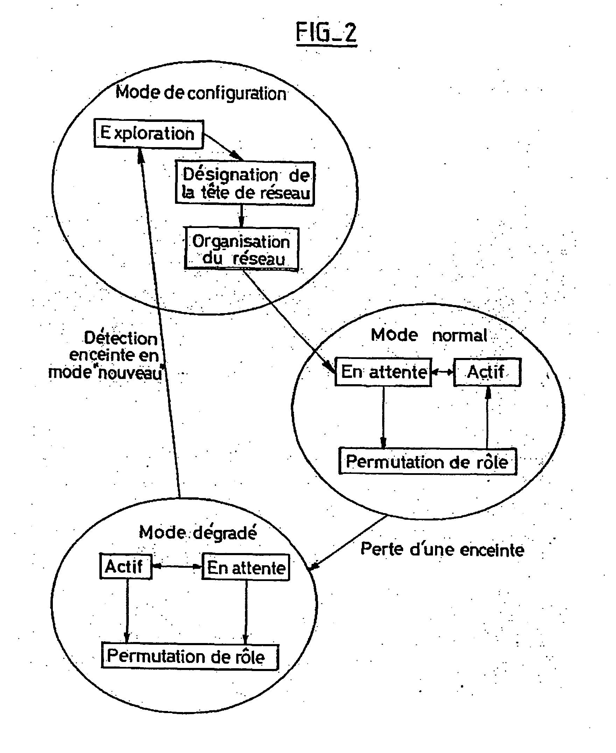

Ceci a été illustré sur la figure 2, par le passage du mode "de configuration" à un mode dit "normal".

Dans ce mode "normal", le système peut prendre deux états, à savoir "en attente" (*ready*) et "actif" (*in use*)*.*

Lorsqu'il vient d'être configuré, le système est à l'état "en attente".

La transition d'état de "en attente" vers "actif" pourra résulter :
- soit de la détection de l'envoi de signaux audio par un périphérique à la tête de réseau,
- soit par une requête de "permutation de rôle" adressée à l'enceinte de tête par une autre enceinte du réseau (cette possibilité sera explicitée plus bas).

À l'état actif, les données audio en provenance d'un périphérique externe circulent sur le réseau, via une enceinte que l'on appellera "hôte" (c'est-à-dire le serveur, dans une relation client/serveur), qui par défaut est l'enceinte de tête, comme dans la configuration de la figure 1c. On verra cependant plus bas, en référence notamment à la figure 1d, que ce rôle peut être temporairement modifié.

Toujours dans cet état actif, le système apparaît vis-à-vis de l'extérieur, globalement, comme un objet *Bluetooth* unique, découvrable par un autre objet *Bluetooth* possédant un profil compatible, c'est-à-dire en l'espèce un périphérique S formant source audio (profil A2DP) et/ou télécommande (profil AVRCP).

Les flux audio et les commandes seront reçus et traités par l'enceinte de tête, celle-ci les diffusant ensuite à toutes les autres enceintes du système, directement ou indirectement (le flux étant dans ce dernier cas relayé par les enceintes situées aux points d'articulation du réseau).

Les messages échangés au sein du réseau sont avantageusement des messages où les signaux audio sont encapsulés dans des messages de données numériques comprenant en outre des données de routage déterminées à partir du graphe de diffusion, avec en particulier :
- l'adresse de l'émetteur du message,
- l'adresse du destinataire du message, et
- un indicateur précisant si le destinataire doit ou non relayer le message : si tel est le cas, le message est simplement transmis à son destinataire ; dans le cas contraire, il est traité par l'enceinte pour être reproduit par le haut-parleur de celle-ci, avec éventuellement possibilité de le retransmettre si nécessaire vers une autre enceinte.

Pour optimiser le débit des données, il est possible, en fonction de la "différenciation" des enceintes, c'est-à-dire du rôle assigné à chacune en fonction de sa position physique, de n'envoyer que les données qui lui sont utiles. Par exemple, si une enceinte, au sens du schéma de routage, est une enceinte destinataire de type "arrière droite", l'enceinte située en amont dans le réseau qui lui relaye les données ne lui relayera que les données destinées à la voie arrière droite.

Par ailleurs, compte tenu des temps de transit des blocs de données du flux audio, ainsi que des décalages temporels introduits par l'utilisation de piles et par les différents traitements numériques appliqués, les flux audio reproduits par les diverses enceintes respectives du réseau peuvent se trouver légèrement décalés entre eux. Pour compenser ce décalage temporel, et assurer une reproduction parfaitement en phase des canaux, le traitement du flux audio prévoit avantageusement l'application d'un retard compensateur sur ceux des canaux qui, autrement, se trouveraient en avance par rapport aux autres. Ces retards compensateurs sont évalué par l'enceinte de tête et appliqués aux flux audio appropriés.

Lorsque le réseau est à l'état "actif", la tête de réseau reçoit des données audio d'une source externe et n'est pas accessible pour un autre type de dialogue. Une modification des paramètres de fonctionnement du réseau (par exemple le réglage du volume sonore), ou la reconfiguration du réseau (par exemple en cas d'ajout ou de retrait d'une enceinte) ne pourront être opérées que lorsque celui-ci est à l'état "en attente".

Pour cela, il faudra attendre la fin de la réception des données depuis le périphérique, ce qui peut être détecté automatiquement par la tête du réseau.

Avantageusement, le système inclut une fonction dite de "permutation des rôles", illustrée à la figure 1d.

On a indiqué plus haut que la tête de réseau était, par défaut, celle des enceintes qui recevait les signaux à diffuser depuis le périphérique extérieur, les autres enceintes étant toutes des enceintes dites "rattachées". Mais on doit pouvoir utiliser une autre source qui, compte tenu de sa position, ne pourra établir un contact radio direct avec la tête de réseau, par exemple une source S', trop éloignée de l'enceinte R pour lui transmettre des données audio. Il peut s'agir également de données en provenance d'une enceinte, autre que l'enceinte de tête, pourvue d'une prise d'entrée connectable par un câble à une source de signaux audio, généralement analogique (ce point sera expliqué plus en détail en référence aux figures 3 à 7). La source S' est en revanche à portée radio de l'une des enceintes rattachées du système, par exemple l'enceinte L' dans l'exemple de la figure 1d.

Pour pouvoir diffuser de la musique dans cette configuration, l'enceinte rattachée L' envoie à la tête de réseau R une "requête de permutation de rôle". Cette requête est reçue et traitée par l'enceinte de tête qui va alors définir provisoirement un nouveau schéma de routage de manière à pouvoir diffuser des signaux audio depuis l'enceinte L', au lieu de le faire depuis l'enceinte R. On notera que cette modification du schéma de routage se fait sans changement de la définition de base du graphe de diffusion; seule l'orientation des différentes branches est éventuellement modifiée, correspondant à une modification des adresses d'origine et de destination dans le schéma de routage.

Ainsi, sans qu'il soit nécessaire de reconfigurer le réseau, l'enceinte L' sera "hôte" (c'est-à-dire serveur, au sens d'une relation client/serveur), en devenant provisoirement tête de réseau, l'enceinte R recevant les données (c'est-à-dire étant un client, au sens d'une relation client/serveur), en devenant provisoirement une enceinte rattachée.

Le traitement des requêtes de permutation de rôle peut être éventuellement être combiné avec des règles de priorité entre sources, par exemple le son en provenance d'un téléphone sans fil étant prioritaire par rapport au son provenant d'un téléviseur, etc.

Cette permutation de rôles est provisoire, le retour à l'état initial étant déclenché par un algorithme détectant l'absence de signaux audio délivrés par la source S'. Le réseau revient alors à l'état "en attente" dans sa configuration originelle.

Selon un autre aspect de l'invention, outre le mode "normal", il est prévu un mode "dégradé" dans lequel le système se place automatiquement lorsqu'une liaison entre deux enceintes est perdue, c'est-à-dire lorsque l'un des voisins du schéma de routage ne peut plus être reconnu.

Le passage au mode dégradé peut intervenir à tout moment dans la mesure où, comme on l'a indiqué plus haut, la liaison radio entre les enceintes est une liaison permanente, même lorsqu'aucun signal audio n'est reproduit et que le système semble en veille à l'utilisateur (il est en fait alors à l'état "en attente", état où les diverses enceintes continuent à échanger entre elles des signaux). En mode "dégradé", le système reste fonctionnel, mais avec des performances moindres, par exemple il fonctionne en mono dans le cas d'un système stéréo, ou avec suppression des voies d'ambiance, etc. Le mode dégradé comprend le mêmes états actif - en attente - permutation de rôles qu'en mode normal, avec des transitions semblables.

Par ailleurs, comme on l'a vu plus haut, le système continue en tâche de fond de détecter la perte d'une enceinte ou bien l'apparition d'une enceinte non rattachée au réseau (enceinte en mode "nouveau"). Dans ce cas, toutes les enceintes repassent alors à ce même mode "nouveau" et le système réexécute une procédure de configuration.

Il est par ailleurs possible de procéder si nécessaire à une reconfiguration dynamique du réseau, de façon transparente pour l'utilisateur. Cette reconfiguration consiste à opérer une réallocation de l'enceinte de tête, notamment si l'un des critères qui avaient permis l'allocation initiale a été modifié : déplacement ou débranchement d'une enceinte, substitution d'une enceinte défectueuse par une autre enceinte, perturbation de la transmission du fait d'une modification de l'environnement, ... Alors le système est capable de reconfigurer dynamiquement le réseau, l'enceinte de tête pouvant être éventuellement - mais non nécessairement - la même enceinte que précédemment.

Avantageusement, pour éviter de reconfigurer le système lorsque cela n'est pas nécessaire (par exemple, si une liaison est instable parce qu'une personne passe devant une enceinte et coupe la liaison momentanément), il est prévu un algorithme limitant le nombre de redémarrages et/ou n'exécutant la reconfiguration qu'après un délai prédéterminé. De même, si une enceinte a tendance à tomber en panne, l'algorithme peut prévoir de la mettre définitivement à l'écart du réseau lors de la prochaine phase de définition du schéma de routage.

On va maintenant décrire un exemple concret, simplifié, de réalisation d'un système selon l'invention, en référence aux figures 3 à 9.

Ce système comprend deux enceintes 10 et 10' reliées entre elles par une liaison sans fil 14. Ce système peut être couplé à divers périphériques, par exemple un baladeur numérique 16 pourvu d'un module *Bluetooth* (interne ou externe) émettant vers le système un flux audio selon un profil A2DP, ou encore un ordinateur portable 18 envoyant de la même façon des données audio au système. Les périphériques peuvent être également des périphériques de commande, par exemple une télécommande 20 envoyant au système des signaux de commande selon un profil AVRCP. Le périphérique peut également être un périphérique susceptible d'envoyer à la fois des signaux audio et des commandes, par exemple un téléphone portable/baladeur numérique *Bluetooth* dont les différentes touches du clavier pourront être utilisées pour piloter le système de l'invention (sélection des sources, volume, balance, ...).

Le système peut également être relié à des éléments traditionnels tels que syntoniseur (*tuner*) FM, lecteur/enregistreur CD ou DVD, téléviseur, etc. par une liaison filaire au moyen de fiches 26 connectées à des prises d'entrée correspondantes prévues sur l'enceinte 10.

La figure 4 montre l'aspect général extérieur de l'enceinte 10, vue de face.

Cette enceinte est par exemple une enceinte à deux voies, avec un haut-parleur 34 de grave/médium et un haut-parleur d'aigu 36, éventuellement dissimulés par une grille décorative 38. L'enceinte est également pourvue d'un bloc de contrôle 40, avec un indicateur lumineux 42 permettant de signaler le fonctionnement par des changements de couleur et/ou de vitesse de clignotement, ainsi que trois touches de commande, avec deux touches "+" et "-" 44 et 46 de diminution ou d'augmentation du volume général, et éventuellement une touche 48 *"Reset"* de réinitialisation du système. L'enceinte comprend également l'antenne 50 pour la transmission sans fil, qui peut être laissé visible dans une région transparente de l'enceinte.

La figure 5 illustre, sous la forme de blocs fonctionnels, les différents organes matériels (*hardware*) de l'enceinte 10.

Outre les différents éléments que l'on vient de citer en référence à la figure 3, l'enceinte comprend également des prises d'entrée 52, disposées sur le côté ou à l'arrière, pour le branchement d'un élément de type lecteur CD ou DVD, téléviseur, etc. par une liaison filaire, ainsi qu'un bloc secteur 54 à raccorder à une prise de courant pour l'alimentation de l'enceinte active.

L'ensemble est architecturé autour d'une unité centrale maîtresse (MCU) 56, associée à une mémoire 58, comprenant un circuit microcontrôleur et processeur numérique de signaux. L'unité centrale 56 est interfacée à un module *Bluetooth* 60, relié à l'antenne 50, par une liaison UART 62. Ce module *Bluetooth* sert à établir des liaisons avec toutes les autres enceintes du système, ainsi qu'avec des périphériques formant sources audio et/ou télécommande, conformément aux spécifications de l'interface *Bluetooth* qui prévoient, entre autres, la possibilité d'envoyer des commandes et des fichiers de données, notamment des fichiers de données audio sous forme de flux continu (*"streaming"*) à un dispositif distant. La pré-, sence d'un objet *Bluetooth* dans le rayon d'action du module est, toujours selon ces spécifications; détectée de manière entièrement automatique sans que l'utilisateur n'ait aucune manipulation à faire pour activer la liaison entre objet et module *Bluetooth,* liaison qui devient opérationnelle du seul fait de l'entrée du périphérique dans le champ d'action du circuit - et, dans le cas présent, à condition bien entendu que l'objet *Bluetooth* soit un périphérique qui dispose d'un profil compatible, c'est-à-dire d'un profil A2DP et/ou AVRCP. Cette détection est opérée de façon permanente par le module 60, en tâche de fond.

L'unité centrale 56 est également reliée au bloc de contrôle 40 (boutons-poussoirs 44, 46 et 48 et indicateur lumineux 42), par une liaison GPIO 64.

Elle est également reliée en sortie à un convertisseur numérique/analogique 66, et en entrée à un convertisseur analogique/numérique 68, par un bus de liaison universel 70, par exemple de type I2S (*Inter-IC Sound*)*.* Le convertisseur de sortie 66 pilote des amplificateurs 72, 74 reliés en sortie aux haut-parleurs respectifs 34, 36. Le convertisseur d'entrée 68 est relié aux bornes 52 via un circuit d'entrée ligne 76, pour numériser les signaux analogiques reçus sur les bornes d'entrée 52.

De préférence, les amplificateurs 72 et 74 sont propres à chacun des haut-parleurs, c'est-à-dire qu'il y a autant d'amplificateurs que de haut-parleurs, avec en entrée un filtrage associé passe-haut/passe-bas, de préférence un filtrage numérique opéré dans l'étage 66, avant conversion. Le filtrage numérique peut être en effet avantageusement réalisé par logiciel, donc de façon très économique sans recours à des composants *hardware* spécifiques, sans risque de dégrader la qualité sonore par interposition d'un filtre analogique, et avec possibilité d'égaliser et d'adapter la courbe de réponse de chaque voie en fonction du haut-parleur. La fréquence de coupure est par exemple choisie à 3 kHz, l'amplificateur 72 reproduisant la bande 20 Hz-3 kHz et l'amplificateur 74 la bande 3 kHz-20 kHz.

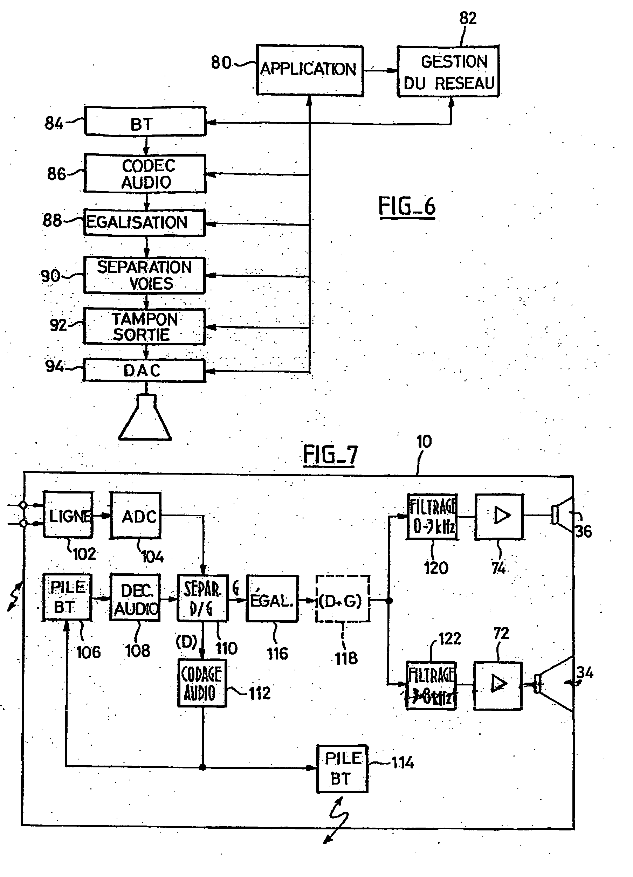

Le flux audio est traité conformément au schéma fonctionnel de la figure 6, qui illustre les différents modules logiciels mis en oeuvre pour la diffusion en continu du flux audio (*streaming*)*.*

Le module applicatif 80 qui assure l'interface avec l'utilisateur est interfacé à un module 82 de gestion du réseau, à un module 84 d'émission/réception *Bluetooth,* et à des modules 86 à 94 de traitement du signal audio.

Le module 86 est un module formant codec audio, pour le décodage du flux reçu par le module 84, et notamment la séparation des divers canaux du flux audio multicanal : canaux droit et gauche, canaux avant et arrière, etc. ainsi que la gestion des informations de service éventuellement encapsulées dans le flux audio.

Le module 88 permet d'appliquer au signal une égalisation numérique appropriée, notamment pour tenir compte de la courbe de réponse particulière des haut-parleurs de l'enceinte.

Le module 90 est un filtre numérique permettant de séparer les deux voies, grave/médium et aigu, à reproduire par les haut-parleurs respectifs de l'enceinte. Les données à reproduire sont appliquées à un tampon de sortie 92 puis au convertisseur numérique/analogique 94 avant d'être dirigées vers les amplificateurs et haut-parleurs respectifs.

La figure 7 représente, sous forme d'un schéma par blocs, les divers éléments de l'enceinte 10 concernés par la reproduction du flux audio.

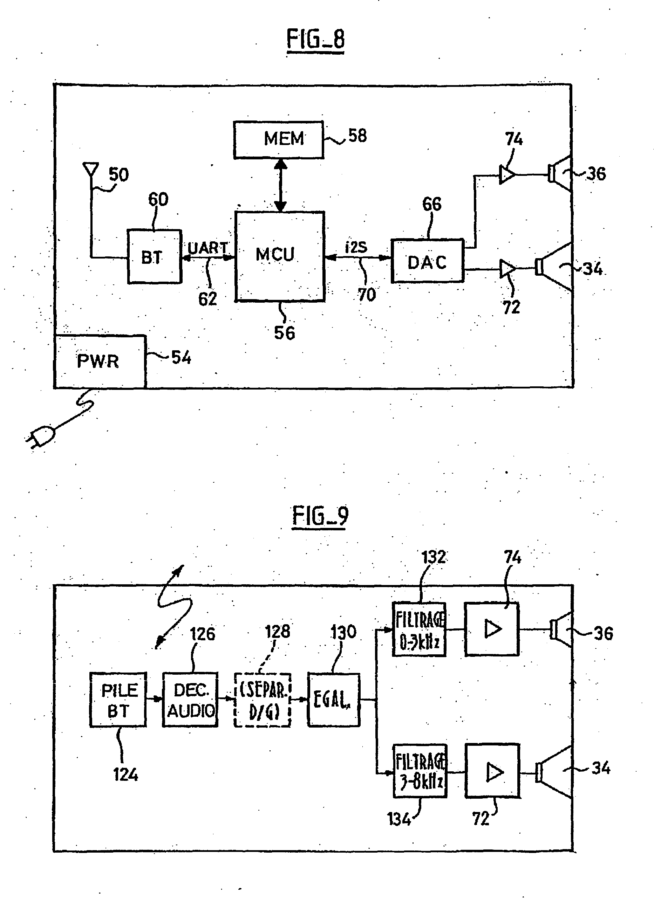

Un module d'entrée ligne 102 reçoit des signaux en provenance d'un appareil relié par un branchement filaire conventionnel, délivrant un signal appliqué au convertisseur analogique/numérique 104. Les autres sources communiquent par une liaison sans fil avec une pile *Bluetooth* 106 alimentant un décodeur audio 108. Le bloc 110 assure la séparation des canaux, droit et gauche dans le cas d'un ensemble stéréo à deux enceintes. Le canal droit, qui sera reproduit par une autre enceinte, est codé par le bloc 112 puis émis vers l'autre enceinte via la pile *Bluetooth* 114. Le canal gauche, destiné à être reproduite par l'enceinte 10, est soumis à un traitement d'égalisation 116, et éventuellement à un mélange des deux canaux droit et gauche lorsque le système fonctionne en mode dégradé (c'est-à-dire lorsque la communication avec l'enceinte droite n'est pas, ou pas encore, possible). Deux filtres numériques 120, 122 séparent les bandes à reproduire par les haut-parleurs respectifs 34, 36 via les amplificateurs 72, 74. Dans certains cas, il est possible de réaliser une version simplifiée, à la fois sur le plan matériel et sur le plan logiciel, comme illustré sur les figures 8 et 9, qui sont homologues respectivement des figures 5 et 7 décrites plus haut.

On y retrouve les mêmes éléments, à l'exception des circuits d'entrée lignes 52, 68 et 76 et du bloc de contrôle 40.

Pour le reste, la configuration matérielle est semblable.

Une telle enceinte peut être notamment utilisée pour des enceintes satellites, dont on est certain qu'elles ne seront jamais utilisées comme enceintes de tête du réseau pour communiquer avec un périphérique extérieur. On peut donc faire l'économie des circuits de codage audio et des divers algorithmes de configuration et de gestion du réseau.

Ainsi, si l'on considère la figure 9, les signaux reçus sont appliqués, via une pile *Bluetooth* 124, à l'étage 126 qui assure un décodage inverse de celui opéré par l'étage 112 de l'enceinte de tête du réseau. Si les canaux droit/gauche n'ont pas été séparés par l'enceinte de tête, cette séparation est opérée par un bloc 128. Les étages 130, 132 et 134 d'égalisation et de filtrage sont identiques aux étages correspondants 116, 120 et 122 de l'enceinte 10.

## Revendications

1. Un système de distribution de signaux audio entre une pluralité d'enceintes actives pour restitution de ces signaux par les enceintes respectives,
ce système comprenant au moins deux enceintes actives (L, R, C, W, L1, L2, R1, R2, L', R' ; 10, 10') avec chacune :
- des moyens transducteurs acoustiques (34, 36),
- des moyens amplificateurs associés (72, 74),
- des moyens d'interfaçage sans fil (50, 56, 60) comprenant des moyens émetteurs et récepteurs aptes à rechercher et à établir une liaison sans fil avec au moins une autre enceinte du système, et
- des moyens pour appliquer aux moyens amplificateurs, pour restitution par les moyens transducteurs, un signal de canal audio dérivé du signal reçu par les moyens d'interfaçage sans fil,
le système comprenant en outre des moyens de configuration des enceintes en un réseau,
système dans lequel :
- les enceintes sont initialement configurées de manière non hiérarchisée entre elles par rapport au réseau ;
- les moyens émetteurs et récepteurs sont aptes à rechercher et établir une liaison sans fil avec toute autre enceinte du système, et
- les moyens de configuration des enceintes en un réseau sont des moyens opérant de manière automatique pour ;
a) rechercher pour chaque enceinte quelles sont les autres enceintes avec lesquelles une liaison sans fil peut être directement établie,
b) établir à partir des résultats de cette recherche une table des visibilités mutuelles de chaque enceinte avec les autres enceintes pour lesquelles une liaison a pu être établie suite à ladite recherche,
c) désigner parmi les enceintes l'une d'entre elles comme enceinte de tête de réseau, et
d) définir à partir de la table des visibilités mutuelles une topologie de réseau hiérarchisé à partir de l'enceinte de tête ainsi désignée.

2. Le système de la revendication 1, dans lequel les moyens de configuration automatique sont également aptes à :
e) rendre au moins une enceinte apte à rechercher et établir une liaison sans fil avec un périphérique distant (S ; 16, 18, 20, 22) susceptible d'émettre un signal audio multicanal codé (A2DP) et/ou un signal de commande (AVRCP), les autre enceintes étant désignées comme enceintes rattachées.

3. Le système de la revendication 2, dans lequel ladite enceinte apte à rechercher et établir une liaison sans fil avec un périphérique distant est l'enceinte de tête du réseau.

4. Le système de la revendication 2, dans lequel les moyens de configuration automatique sont également aptes à :
f) rendre les enceintes rattachées inaptes à rechercher et établir une liaison sans fil avec un périphérique distant susceptible d'émettre un signal audio multicanal codé et/ou un signal de commande.

5. Le système de la revendication 2, dans lequel les moyens de configuration automatique sont également aptes à :
g) définir pour le réseau, à partir de la topologie de réseau hiérarchisé, un graphe orienté de diffusion de signaux audio à reproduire par le système d'enceintes, cette diffusion étant opérée depuis l'enceinte de tête vers les autres enceintes du réseau soit directement depuis ladite enceinte de tête, soit indirectement après que les signaux aient été relayés par une ou plusieurs autres enceintes du réseau.

6. Le système de la revendication 5, dans lequel le système peut occuper alternativement deux états fonctionnels, à savoir :
- un état actif, en présence de signaux audio diffusés au sein du réseau, et
- un état d'attente, en l'absence de signaux audio diffusés au sein du réseau,
et dans lequel les moyens de configuration automatique sont inhibés lorsque le système est à l'état actif.

7. Le système de la revendication 5, dans lequel les moyens de configuration automatique sont également aptes à :
h) recevoir d'une enceinte rattachée un ordre de permutation de rôles et transmettre cet ordre à l'enceinte de tête, et
i) attribuer temporairement un statut d'enceinte rattachée à l'enceinte de tête, attribuer temporairement un statut d'enceinte de tête à l'enceinte rattachée ayant émis l'ordre de permutation de rôles, et adapter en conséquence le graphe de diffusion orienté.

8. Le système de la revendication 5, dans lequel lesdits signaux audio diffusés sur le réseau sont des signaux audio encapsulés dans des messages de données numériques comprenant en outre des données de routage du message, déterminées à partir dudit graphe de diffusion défini par les moyens de configuration.

9. Le système de la revendication 8, dans lequel, les enceintes étant individualisées par des adresses respectives, lesdites données de routage du message comprennent l'adresse de l'enceinte émettrice du message; l'adresse de l'enceinte destinataire du message, et un indicateur spécifiant si l'enceinte destinataire doit reproduire les signaux audio, ou bien les relayer vers une ou plusieurs autres enceintes du réseau.

10. Le système de la revendication 5, dans lequel lesdits signaux audio diffusés sur le réseau sont des signaux audio multicanal, et dans lequel les enceintes comprennent des moyens (108, 110) pour extraire du signal audio multicanal qu'elles reçoivent le signal de canal audio qui leur est destiné, à appliquer aux moyens amplificateurs ce signal de canal audio, et à éventuellement réémettre les autres signaux de canal audio vers au moins une autre enceinte du système.

11. Le système de la revendication 1, dans lequel les moyens de configuration automatique sont des moyens activés à la demande par appui sur un bouton (48) d'une enceinte, et/ou sont des moyens activés à chaque mise sous tension des circuits d'alimentation d'une enceinte.

12. Le système de la revendication 1, dans lequel les moyens de configuration automatique sont en outre aptes, en cas d'échec de la configuration, à activer le système en un mode dégradé où une pluralité de signaux de canal audio différents sont préalablement combinés entre eux et diffusés à un nombre réduit d'enceintes du réseau pour restitution par les moyens transducteurs de ces dernières.

13. Le système de la revendication 1, comprenant en outre :
- des moyens d'évaluation des temps de transfert relatifs des signaux de canal audio aux différentes enceintes respectives du système, et
- des moyens de recalage temporel, pour appliquer à au moins certains des signaux de canal audio des retards respectifs propres à compenser les écarts entre les temps de transfert relatifs ainsi évalués.

14. Le système de la revendication 1, dans lequel l'une au moins des enceintes du réseau comprend en outre des moyens (52, 76) de connexion filaire à une source (24) de signaux audio, et des moyens (68) de conversion analogique/numérique de ceux-ci en un signal audio correspondant.

15. Le système de la revendication 1, comprenant en outre des moyens de pilotage du système, aptes à recevoir d'un périphérique un signal de commande et à exécuter en réponse des actions correspondantes de modification des paramètres de fonctionnement du système parmi : la sélection d'une source de signaux audio parmi plusieurs sources simultanément actives ; la variation du volume général, ou du volume relatif, des signaux restitués par les moyens transducteurs des différents enceintes du système ; et/ou la coupure momentanée du son.

16. Le système de la revendication 1, dans lequel les moyens aptes à désigner parmi les enceintes l'une d'entre elles comme enceinte de tête du réseau opèrent en fonction de critères prédéterminés comprenant un ou plusieurs des critères parmi : numéro d'adresse MAC ; possibilité d'établir une liaison directe de l'enceinte de tête à chacune des autres enceintes du réseau ; recherche de la topologie la plus simple ; rôle acoustique de l'enceinte dans le réseau.

17. Le système de la revendication 1 ou de la revendication 16, dans lequel les moyens aptes à désigner parmi les enceintes l'une d'entre elles comme enceinte de tête du réseau sont des moyens aptes à redésigner dynamiquement l'enceinte de tête en cas de modification desdites visibilités mutuelles des enceintes et/ou desdits critères prédéterminés.

18. Le système de la revendication 1, dans lequel les moyens aptes à rechercher pour chaque enceinte quelles sont les autres enceintes avec lesquelles une liaison sans fil peut être directement établie, comprennent des moyens d'authentification mutuelle des enceintes.

## Claims

1. A system for distributing audio signals among a plurality of active speaker enclosures for restitution of said signals by said respective enclosures, said system comprising at least two active enclosures (L, R, C, W, L1, L2, R1, L', R' ; 10, 10'), each one comprising
- acoustic transducer means (34, 36),
- associated amplifier means (72, 74),
- wireless interface means (50, 56, 60) comprising transmitter and receiver means adapted to search and establish a wireless connection with at least one other enclosure of the system, and
- means for applying to the amplifier means, for restitution by the transducer means, an audio channel signal deriving from the signal received by the wireless interface means,
wherein said system furthermore comprises means for configuring enclosures into a network, wherein
- the enclosures initially are non-hierarchically configured among themselves relative to the network ;
- the transmitter and receiver means are adapted to search and establish a wireless connection with any other enclosure of the system, and
- the means for configuring the enclosures into a network are means operating automatically in order :
a) to search for each enclosure those other enclosures with which a wireless connection can directly be established,
b) to establish from the results of said search a mutual visibility table of each enclosure with those other enclosures for which a connection could be established as a consequence of said search,
c) to designate one of said enclosures as being the head end enclosure, and
d) based on the mutual visibility table, to define a hierarchized network topology from the so designated head end enclosure.

2. The system according to claim 1, wherein said automatic configuration means are also adapted to :
e) render at least one enclosure adapted to search and establish a wireless connection with a distant peripheral that could emit a coded multichannel audio signal (A2DP) and/or a control signal (AVRPC), wherein the other enclosures are designated as being the attached enclosures.

3. The system according to claim 2, wherein said enclosure adapted to search and establish a wireless connection with a distant peripheral is the head end enclosure.

4. The system according to claim 2, wherein the automatic configuration means are also adapted :
f) to render the attached enclosures unable to search and establish a wireless connection with a distant peripheral that could emit a coded multichannel audio signal and/or a control signal.

5. The system according to claim 2, wherein the automatic configuration means are also adapted :
g) to define for the network, on the basis of the hierarchized network topology, an oriented broadcast graph to be reproduced by the enclosure system, wherein said broadcasting is operated from the head end enclosure in the direction of the other enclosures, either directly from said head end enclosure, or indirectly after the signals has been relayed by one or more other enclosures of the network.

6. The system according to claim 5, wherein said system can alternately take two functional states, namely :
- an active state, in the presence of audio signals broadcasted inside the network, and
- a standby state, in the absence of audio signals broadcasted inside the network,
and wherein the automatic configuration means are inhibited when the system is in an active state.

7. The system according to claim 5, wherein the automatic configuration means are also adapted :
h) to receive from an attached enclosure a role permutation order and receive said order at the head end enclosure, and
i) to temporarily allocate an attached enclosure status to the head end enclosure, to temporarily allocate a head end enclosure status to the attached enclosure that has emitted the role permutation order, and as a consequence to adapt the oriented broadcast graph.

8. The system according to claim 5, wherein said audio signals broadcasted on the network are audio signals encapsulated in digital data messages furthermore comprising message routing data determined from said broadcast graph that has been defined by the configuration means.

9. The system according to claim 8, wherein, the enclosure being individualized by respective addresses, said message routing data comprise the address of the message emitting enclosure, the address of the message receiving enclosure, and an indicator specifying whether the receiving enclosure has to reproduce audio signals or relay them to one or more other enclosures of the network.

10. The system according to claim 5, wherein said audio signals broadcasted on the network are multichannel audio signals, and wherein the enclosures comprise means (108, 110) for extracting from the received multichannel audio signal the audio channel signal that is destined for them, for applying to the amplifier means said audio channel signal and possibly to reemit the other audio channel signals to at least one other enclosure of the system.

11. The system according to claim 1, wherein the automatic configuration means are means that are activated on demand by pressing a knob (48) disposed on one enclosure and/or are means activated every time the supply circuits of an enclosure are switched on.

12. The system according to claim 1, wherein the automatic configuration means are furthermore adapted, in case of configuration failure, to activate the system in a degraded mode wherein a plurality of different audio channel signals are preliminarily combined with each other and are broadcasted to a reduced number of enclosures of the network for restitution by their transducer means.

13. The system according to claim 1, furthermore comprising :
- means for evaluating the relative transfer times of the audio channel signals to the different respective enclosures of the network,
- timing means for applying to at least certain of the audio channel signals respective delays that are able to compensate for the deviations between the relative transfer times so evaluated.

14. The system according to claim 1, wherein the at least one enclosure of the network furthermore comprises wire connection means (52, 76) to an audio signal source (24) and means (68) for their analogue-to-digital conversion into a corresponding audio signal.

15. The system according to claim 1, furthermore comprising system monitoring means that are adapted to receive from a peripheral a control signal and perform as a response corresponding actions modifying the system operating parameters among : the selection of an audio signal source among many simultaneously active sources ; the variation of the general or relative volume of the signals restituted by the transducer means of different enclosures of the system ; and/or the sound cut off.

16. The system according to claim 1, wherein the means adapted to designate one of the enclosures as being the head end enclosure operate as a function of predetermined criteria comprising one or more of following criteria : MAC address number ; possibility of establishing a direct connection from the head end enclosure to each one of the other enclosures of the network ; search of the simplest topology ; acoustic role of the enclosure of the network.

17. The system according to claim 1 or 16, wherein the means adapted to designate one of the enclosures as being the head end enclosure are means adapted to dynamically redesignate the head end enclosure in case of modification of said mutual visibilities of the enclosures and/or of said predetermined criteria.

18. The system according to claim 1, wherein the means adapted to search for each enclosure those other enclosures with which a wireless connection can directly be established comprise means for mutual authentification of the enclosures.

## Patentansprüche

1. Ein System zur Verteilung von Audiosignalen zwischen einer Vielzahl von aktiven Lautsprecherboxen zur Wiedergabe dieser Signale durch die respektiven Lautsprecherboxen, wobei obengenanntes System wenigstens zwei aktive Lautsprecherboxen (L, R, W, L1, L2, R1, R2, L', R' ; 10, 10') umfasst, jede Box umfassend :
- Schallwandlermittel (34, 36),
- verbundene Verstärkermittel (72, 74),
- drahtlose Kopplungsmittel (50, 56, 60), die Sendermittel und Empfängermittel umfassen, die geeignet sind, eine drahtlose Verbindung mit wenigstens einer anderen Lautsprecherbox des Systems zu suchen und herzustellen, und
- Mittel zum Anlegen eines vom durch die drahtlosen Kopplungsmittel empfangenen Signal abgeleiteten Audiokanalsignals an die Verstärkermittel zur Wiedergabe durch die Schallwandlermittel,
wobei das System ausserdem Mittel zum Konfigurieren der Lautsprecherboxen zu einem Netzwerk umfasst, wobei in diesem System :
- die Lautsprecherboxen anfänglich in einer nichthierarchisierten Weise zwischeneinander gegenüber dem Netzwerk konfiguriert sind ;
- die Sender- und Empfängermittel geeignet sind, eine drahtlose Verbindung mit jeder anderen Lautsprecherbox des Systems zu suchen und herzustellen, und
- die Mittel zum Konfigurieren der Lautsprecherboxen zu einem Netzwerk Mittel sind, die automatisch wirken, um
a) für jede Lautsprecherbox solche anderen Lautsprecherboxen zu suchen, mit welchen es möglich ist, eine drahtlose Verbindung direkt herzustellen,
b) ab den Ergebnissen dieser Suche eine gegenseitige Sichtbarkeitstabelle jeder Lautsprecherbox mit solchen anderen Lautsprecherboxen herzustellen, mit welchen es möglich gewesen ist, als Konsequenz genannter Suche eine Verbindung herzustellen,
c) unter den Lautsprecherboxen eine Lautsprecherbox als Netzwerkkopf-Lautsprecherbox zu bezeichnen, und
d) basierend auf der gegenseitigen Sichtbarkeitstabelle eine hierarchisiertes Netzwerk-Topologie ab der so bezeichneten Netzwerkkopf-Lautsprecherbox zu definieren.

2. Das System gemäss Anspruch 1, in welchem die Mittel zum automatischen Konfigurieren weiterhin geeignet sind :
e) wenigstens eine Lautsprecherbox geeignet zu machen, eine drahtlose Verbindung mit einem entfernten Peripheriegerät (S ; 16, 18, 20, 22) zu suchen und herzustellen, das anfällig ist, ein kodiertes Multikanal-Audiosignal (A2DP) und/oder ein Steuersignal (AVRCP) zu senden, wobei die anderen Lautsprecherboxen als angeschlossene Lautsprecherboxen bezeichnet sind.

3. Das System gemäss Anspruch 2, in welchem genannte Lautsprecherbox, der geeignet ist, eine drahtlose Verbindung mit einem entfernten Peripherigerät zu suchen und herzustellen, die Netzwerkkopf-Lautsprecherbox ist.

4. Das System gemäss Anspruch 2, in welchem die Mittel zum automatischen Konfigurieren auch geeignet sind :
f) die angeschlossenen Lautsprecherboxen ungeeignet zu machen, eine drahtlose Verbindung mit einem entfernten Peripheriegerät zu suchen und herzustellen, das anfällig ist, ein kodiertes Multikanal-Audiosignal und/oder ein Steuersignal zu senden.

5. Das System gemäss Anspruch 2, in welchem die Mittel zum automatischen Konfigurieren auch geeignet sind :
g) für das Netzwerk, basierend auf der hierarchisierten Netzwerk-Topologie, einen orientierten Graph für die Aussendung von vom Lautsprecherbox-system zu reproduzierenden Audiosignalen zu definieren, wobei die Aussendung seit der Kopf-Lautsprecherbox zu den anderen Lautsprecherboxen des Netzwerks entweder unmittelbar seit genannter Kopf-Lautsprecherbox, oder nachdem die Signale durch einen oder vielen anderen Lautsprecherboxen des Netzwerks übernommen sind, bewirkt wird.

6. Das System gemäss Anspruch 5, in welchem das System abwechselnd zwei Funktionszustände nehmen kann, d.h. :
- einen aktiven Zustand in Gegenwart von innerhalb des Netzwerks ausgesandten Audiosignalen, und
- einen Bereitschaftszustand in Abwesenheit von innerhalb des Netzwerks ausgesandten Audiosignalen,
und in welchem die Mittel zum automatischen Konfigurieren inhibiert werden, wenn das System im aktiven Zustand ist.

7. Das System gemäss Anspruch 5, in welchem die Mittel zum automatischen Konfigurieren ebenfalls geeignet sind :
h) ab einer angeschlossenen Lautsprecherbox einen Rollenvertauschungsbefehl zu empfangen und diesen Befehl zur Netzwerkkopf-Lautsprecherbox zu übermitteln und
i) provisorisch einen "angeschossener Netzwerkkopf-Lautsprecherbox"-Status der Netzwerkkopf-Lautsprecherbox zuzuteilen, provisorisch einen "Netzwerkkopf-Lautsprecherbox"-Status der angeschlossenen Lautsprecherbox zuzuteilen, der den Rollenvertauschungsbefehl gesandt hat, und folglich den orientierten Aussendungsgraph anzupassen.

8. Das System gemäss Anspruch 5, in welchem genannte auf dem Netzwerk ausgesandten Audiosignale in digitalen Datenmeldungen eingekapselte Audiosignale sind, die ausserdem Verkehrslenkungsdaten umfassen, die basierend auf genanntem durch die Konfigurationsmittel definierten Aussendungsgraph festgelegt sind.

9. Das System gemäss Anspruch 8, in welchem, wenn die Lautsprecherboxen durch die respektiven Adressen individualisiert sind, genannte Verkehrslenkungsdaten die Adresse der die Meldung aussendenden Lautsprecherbox, die Adresse der die Meldung empfangenden Lautsprecherbox und einen Indikator umfassen, der bestimmt, ob die empfangende Lautsprecherbox die Audiosignale wiedergeben oder zu einer oder mehreren Lautsprecherboxen des Netzwerks übernehmen soll.

10. Das System gemäss Anspruch 5, in welchem genannte auf dem Netzwerk ausgesandten Audiosignale Multikanal-Audiosignale sind, und in welchem die Lautsprecherboxen Mittel (108, 110) aufweisen, um vom empfangenen Multikanal-Audiosignal das Audiokanalsignal zu extrahieren, das zu ihnen bestimmt ist ; um an die Verstärkermittel dieses Audiokanalsignal anzulegen ; und möglicherweise die anderen Audiokanalsignale zu wenigstens einer anderen Lautsprecherbox des Systems noch einmal zu senden.

11. Das System gemäss Anspruch 1, in welchem die Mittel zum automatischen Konfigurieren Mittel sind, die auf Abruf durch Druck auf einen Knopf (48) einer Lautsprecherbox und/oder die durch jedes Einschalten der Speisestromkreise einer Lautsprecherbox aktiviert werden.

12. Das System gemäss Anspruch 1, in welchem die Mittel zum automatischen Konfigurieren ausserdem geeignet sind, im Falle von einem Misserfolg des Konfigurierens das System in einen beschädigten Modus zu aktivieren, in welchem eine Mehrzahl von verschiedenen Audiokanalsignalen im voraus zwischeneinander kombiniert und zu einer reduzierten Zahl von Lautsprecherboxen des Netzwerks ausgesandt werden, um durch die Wandlermittel letzterer wiedergegeben zu werden.

13. Das System gemäss Anspruch 1, umfassend ausserdem :
- Mittel zum Abschätzen der relativen Übertragungszeiten der Audiokanalsignale zu den verschiedenen respektiven Lautsprecherboxen des Systems, und
- Timing-Mittel, um an wenigstens einige der Audiokanalsignale respektive Verzögerungen anzulegen, die geeignet sind, die Abweichungen zwischen den so abgeschätzten relativen Übertragungszeiten auszugleichen.

14. Das System gemäss Anspruch 1, in welchem wenigstens eine der Lautsprecherbox des Netzwerks ausserdem Drahtverbindungsmi.ttel (52, 76) zu einer Audiosignal-Quelle (24) und Mittel (68)zur Analog-Digital-Umsetzung der letzeren zu einem entsprechenden Audiosignal umfasst.

15. Das System gemäss Anspruch 1, ausserdem umfassend Mittel zur Steuerung des Systems, die geeignet sind, von einem Peripheriegerät ein Steuersignal zu empfangen und als Antwort entsprechende Tätigkeiten zur Änderung von unter folgende ausgewählten Betriebsparameter des Systems auszuführen : die Auswahl einer Quelle von Audiosignale unter mehreren gleichzeitig aktiven Quellen ; die Veränderung der allgemeinen oder der relativen Stärke der durch die Wandlermittel der verschiedenen Lautsprecherboxen des Systems wiedergegebenen Signale ; und/oder die augenblickliche Abschaltung des Tons.

16. Das System gemäss Anspruch 1, in welchem die Mittel, die geeignet sind, unter den Lautsprecherboxen eine als Netzwerkkopf-Lautsprecherbox zu bezeichnen, in Abhängigkeit von vorbestimmten Kriterien wirken, die wenigstens ein oder mehrere der folgenden Kriterien umfassen : MAC-Adresse-Nummer ; Möglichkeit, eine direkte Verbindung zwischen der Kopf-Lautsprecherbox und jeder der anderen Lautsprecherboxen des Netzwerks herzustellen ; Suchen der einfachsten Topologie ; akustische Rolle der Lautsprecherbox im Netzwerk.

17. Das System gemäss Anspruch 1 oder 16, in welchem die Mittel, die geeignet sind, unter den Lautsprecherboxen eine als Netzwerkkopf-Lautsprecherbox zu bezeichnen, Mittel sind, die geeignet sind, die Kopf-Lautsprecherbox im Falle einer Veränderung der genannten gegenseitigen Sichtbarkeiten der Lautsprecherboxen und/oder genannter vorbestimmten Kriterien dynamisch neuzubezeichnen.

18. Das System gemäss Anspruch 1, in welchem die Mittel, die geeignet sind, für jede Lautsprecherbox solche anderen Lautsprecherboxen zu suchen, mit welchen eine drahtlose Verbindung direkt hergestellt werden kann, gegenseitige Authentifikationsmittel der Lautsprecherboxen umfassen.
